# EUROPÄISCHE PATENTSCHRIFT

(11) **EP 1 113 234 B1**
(45) Veröffentlichungstag und Bekanntmachung des Hinweises auf die Patenterteilung: **26.01.2005**
(21) Anmeldenummer: 00126586.7
(22) Anmeldetag: 13.12.2000
(51) Int. Cl.: F16L 11/22, F16L 59/153, F24J 2/24

(54) **Leitungssystem zur Verrohrung von Anlagenkomponenten im Bereich der Heizungstechnik**
Piping system for heat engineering
Système de tuyauterie pour chauffage

(30) Priorität: 31.12.1999 DE 29923057 U
(43) Veröffentlichungstag der Anmeldung: 04.07.2001
(73) Patentinhaber: Baumann, Roland, 89134 Blaustein (DE)
(72) Erfinder: Baumann, Roland, 89134 Blaustein (DE)
(74) Vertreter: Lorenz, Werner, Dr.-Ing.

(56) Entgegenhaltungen:
- DE-A- 2 548 024
- DE-U- 29 617 936
- DE-U- 29 815 001
- FR-A- 2 576 662
- US-A- 3 058 493
- US-A- 4 399 319

## Beschreibung

Die Erfindung betrifft ein Leitungssystem zur Verrohrung von Anlagenkomponenten im Bereich der Heizungstechnik, insbesondere von Solaranlagen, nach der im Oberbegriff von Anspruch 1 näher definierten Art.

Ein gattungsgemäßes Leitungssystem ist aus der DE 25 48 024 A bekannt. Problematisch ist dabei jedoch die verhältnismäßig aufwändige und sehr unflexible Montage der Rohrleitungen.

Aus der DE 296 17 936 U1 ist eine flexible Mehrfachrohrleitung bekannt, welche insbesondere zur Verrohrung von Solaranlagen dienen soll, und welche mindestens zwei flexible Rohrleitungen aufweist, welche mit einem Wärmedämmmaterial gegeneinander und gegenüber der Umgebung isoliert sind.

Die hierfür vorgesehenen Rohrleitungen können insbesondere als flexible Rohrleitungen, beispielsweise als Wellrohre oder als flexible Kupferleitungen, ausgebildet sein. Probleme bezüglich der Verarbeitung und der Montage der dort beschriebenen flexiblen Mehrfachrohrleitungen liegen insbesondere im Anschluss der Mehrfachrohrleitung an Komponenten, wie beispielsweise Pumpen, Speicher, Solarkollektoren oder ähnlichem. Dazu müssen die Leitungsenden über einen größeren Bereich von dem Wärmedämmmaterial befreit und in zwei getrennte Leitungsstränge aufgeteilt werden, wobei diese anschließend wieder mit einem entsprechenden Wärmedämmmaterial isoliert werden müssen. Dies bedeutet einen großen Montageaufwand und führt häufig zu Ungenauigkeiten und einer schlechten Isolation der nun getrennt voneinander verlaufenden Leitungsenden.

Ein weiteres Problem, welches insbesondere beim Einsatz im Bereich von Solaranlagen auftritt, da hier als Wärmeträgermedien Solen oder ähnliche frostbeständige Wärmeträgermedien umgewälzt werden, liegt im Bereich der Dichtungselemente. Insbesondere beim Einsatz der hochflexiblen Wellrohre kommt es immer wieder zu Problemen bezüglich der Dichtheit, da die Inhaltsstoffe der Solen oder vergleichbaren frostbeständigen Wärmeträgermedien die für Wellrohre üblichen Dichtungseinrichtungen und Dichtungselemente, wie beispielsweise O-Ringe aus flexiblen, gummiartigen Materialien, angreifen.

Es ist daher Aufgabe der Erfindung, ein montagefreundliches, leicht und insbesondere sehr flexibel zu verlegendes und sicher abzudichtendes Leitungssystem zur Verrohrung von Anlagenkomponenten im Bereich der Heiztechnik zu schaffen, welches wenigstens zwei flexible Rohrleitungen aufweist, welche mit einem Wärmedämmmaterial gegeneinander und gegenüber der Umgebung isoliert sind.

Erfindungsgemäß wird diese Aufgabe durch die in Anspruch 1 genannten Merkmale gelöst.

Durch die Ausführung der flexiblen Rohrleitungen als Wellrohre lässt sich über große Strecken des Leitungssystems die sehr hohe Flexibilität der Wellrohre nutzen und in ihren jeweiligen Endbereichen lassen sich gegebenenfalls einfache, effektive und kostengünstige Klemmringdichtungen auf den wenigstens annähernd zylindrischen Rohrelementen problemlos einsetzen, um schnell und einfach eine hohe und zuverlässige Dichtheit, gepaart mit einer hohen Resistenz gegen die in den Rohrleitungen zirkulierenden Medien enthaltenen Stoffe zu realisieren.

Dadurch, dass die flexiblen Rohrleitungen aus in axialer Richtung abwechselnd angeordneten wellrohrartigen und wenigstens annähernd zylindrischen Rohrelementen ausgebildet sind, ist einerseits eine weiterhin sehr hohe Flexibilität aufgrund der wellrohrartigen Rohrelementbereiche gewährleistet, andererseits ist durch die jeweils dazwischen angeordneten wenigstens annähernd zylindrischen Rohrelemente sichergestellt, dass durch ein einfaches Abschneiden des Rohrelements in wenigstens annähernd jedem Bereich ein wenigstens annähernd zylindrisches Rohrelement als Abschluss der gesamten Rohrleitung zur Verfügung steht.

Andererseits ist das Wärmedämmmaterial als einstückiger Wärmedämmschlauch ausgeführt, in dessen wenigstens zwei Öffnungen die flexiblen Rohrleitungen zu liegen kommen. Damit kann das Leitungssystem einfach und ohne großen Aufwand über größere Strecken zwischen den einzelnen Anlagenkomponenten verlegt werden.

Durch die erfindungsgemäße Lösung kann des weiteren erreicht werden, dass Dichtungseinrichtungen Verwendung finden können, welche an sich bekannt sind, und welche unter den gegebenen Umständen eine ausreichende Resistenz gegenüber den Inhaltsstoffen der in den Rohrleitungen laufenden Medien aufweisen.

In einer besonders günstigen Ausführungsform der Erfindung weisen die auf den annähernd zylindrischen Rohrelementen angeordneten Dichtungseinrichtungen dabei ausschließlich metallische Werkstoffe auf.

Damit kann in besonders vorteilhafter Weise auf die gummiartigen Materialien bei den Dichtungen verzichtet werden, wodurch es zu keiner negativen Einwirkung der in dem umgewälzten Medium befindlichen Chemikalien auf die Dichtungen kommen kann.

In einer besonders vorteilhaften und günstigen Weiterbildung der Erfindung können diese Dichtungseinrichtungen auch aus ausschließlich metallischen Werkstoffen als in großen Stückzahlen hergestellte, an sich bekannte und kostengünstige Klemmringdichtungen ausgeführt sein.

Die Rohrelemente können in einer weiteren sehr günstigen Ausgestaltung dieser Ausführungsform der Erfindung mit den flexiblen Rohrleitungen, also den Wellrohren, verschweißt sein.

Neben der Möglichkeit ein weiteres Dämmmaterial, welches als eigenständiges Schlauchmaterial ausgebildet ist, auf die jeweiligen Endstücke des Leitungssystems aufzuschieben und mit dem einstückigen Dämmschlauch zu verkleben, um die jeweiligen Endstücke des Leitungssystems zu dämmen, ergibt sich zusätzlich die besonders günstige Ausführungsform, dass der einstückige Wärmedämmschlauch zwischen den beiden flexiblen Rohrleitungen Sollbruchstellen, beispielsweise in Form einer Perforation, aufweist, so dass der Wärmedämmschlauch wenigstens im Bereich der Leitungsenden in zwei isolierte Einzelleitungen auftrennbar ist.

Durch diese Sollbruchstellen kann der Wärmedämmschlauch praktisch zu zwei bereits wärmegedämmten flexiblen Einfachrohrleitungen auseinandergetrennt werden. Diese Trennung kann dabei ohne großen Montageaufwand durch ein einfaches Zerreißen entlang der Sollbruchstellen erfolgen, so dass die Endbereiche des Leitungssystems bei der Montage einfach in zwei flexible Einfachrohrleitungen aufgetrennt werden können, welche dann in ihrer jeweils erforderlichen Länge zugeschnitten mit den entsprechenden Anschlüssen an den Anlagenkomponenten einfach und sicher verbunden werden können.

In einer weiteren vorteilhaften Ausgestaltung der Erfindung kann das Dämmmaterial dabei wenigstens eine weitere Öffnung, Kerbe oder dergleichen aufweisen, welche zur Aufnahme einer Steuer-/Messleitung vorgesehen ist.

Damit lässt sich in das Leitungssystem zusätzlich eine entsprechende Steuer- oder Messleitung, beispielsweise zur Erfassung der Temperatur in einem Sonnenkollektor integrieren, welche dann problemlos und ohne zusätzlichen Aufwand zusammen mit dem Leitungssystem über größere Strecken verlegt werden kann.

Weitere vorteilhafte Ausgestaltungen der Erfindung ergeben sich aus den weiteren Unteransprüchen und dem anhand der Zeichnungen nachfolgend prinzipmäßig dargestellten Ausführungsbeispiel.

Es zeigt:
- Fig. 1: eine schematische Darstellung einer Solaranlage mit einem erfindungsgemäßen Leitungssystem zu ihrer Verrohrung;
- Fig. 2: einen Querschnitt durch das Leitungssystem;
- Fig. 3: einen Endbereich des Leitungssystems in einem Teilschnitt; und
- Fig. 4: eine erfindungsgemäße Ausführungsform einer flexiblen Rohrleitung des erfindungsgemäßen Leitungssystems.

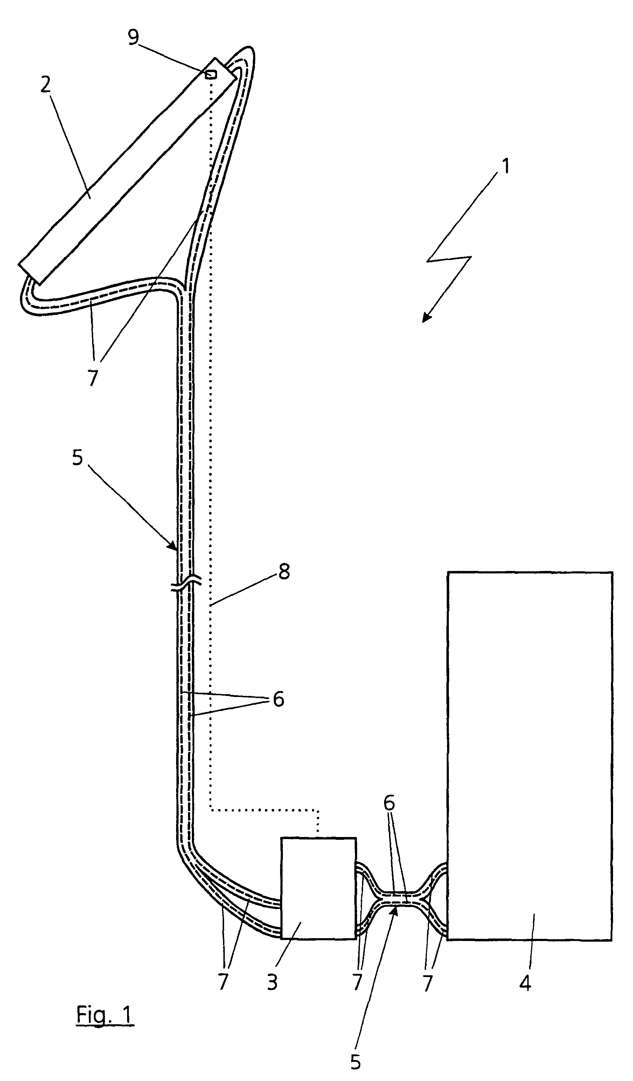

In Fig. 1 sind diverse Anlagenkomponenten aus dem Bereich der Heizungstechnik, hier insbesondere eine Solaranlage 1, mit einem Sonnenkollektor 2, einer Förder- und Regeleinrichtung 3 sowie einer Speichereinrichtung 4 dargestellt.

Diese einzelnen Anlagenkomponenten 2, 3, 4 sind jeweils über Leitungssysteme 5 miteinander verbunden. Die später noch näher erläuterten Leitungssysteme 5 weisen dabei jeweils zwei flexible Rohrleitungen 6 auf, welche hier durch die gestrichelten Linien angedeutet sind. Über den größten Teil der Länge der Leitungssysteme 5 sind die beiden flexiblen Rohrleitungen 6 dabei zu dem gemeinsamen Leitungssystem 5 zusammengefasst, erst an Leitungsenden 7 der Leitungssysteme 5 werden die flexiblen Rohrleitungen 6 in der Art auseinandergeführt, dass ein einfaches Anschließen an die gegebenenfalls weit voneinander entfernt liegenden Anschlusspunkte der Anlagenkomponenten 2, 3, 4 ermöglicht wird.

Außerdem ist in Fig. 1 eine Steuer-/Messleitung 8 angedeutet, welche eine Sensorik 9, insbesondere einen Temperaturfühler, mit der Förder- und Regeleinrichtung 3 verbindet, und so den gezielten, geregelten Betrieb der Solaranlage 1 ermöglicht.

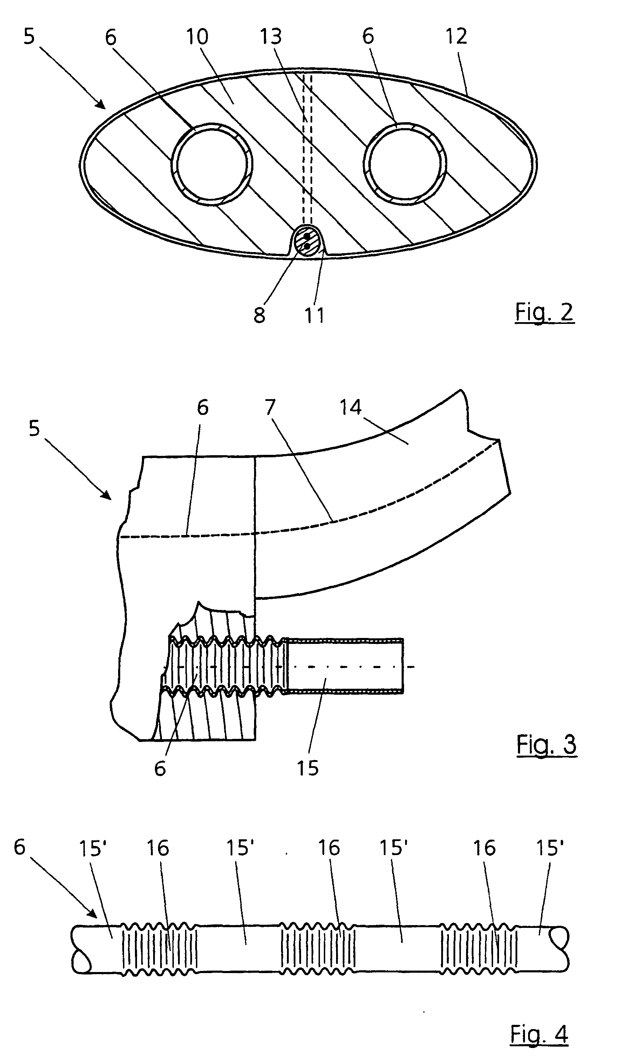

Fig. 2 zeigt nun einen Querschnitt durch das Leitungssystem 5. Dabei sind die beiden flexiblen Rohrleitungen 6 erkennbar, welche in einem Wärmedämmschlauch 10 angeordnet sind. Der Wärmedämmschlauch 10 ist dabei über die wenigstens annähernd größte Länge des Leitungssystems 5, also immer dann, wenn die beiden flexiblen Rohrleitungen 6 wenigstens annähernd parallel nebeneinander verlaufen, als einstückiger Wärmedämmschlauch 10 ausgebildet.

Dieser Wärmedämmschlauch 10 kann bei Bedarf eine Kerbe 11 aufweisen, in welcher die Steuer-/Messleitung 8 verlegt werden kann bzw. bereits vormontiert ist.

In dem in Fig. 2 dargestellten Ausführungsbeispiel ist die Steuer-/Messleitung 8 und der Wärmedämmschlauch 10 außerdem von einer Folie 12 aus einem UV-beständigen Material, beispielsweise einer Polyethylen-Folie 12, umgeben. Damit kann sichergestellt werden, dass die Steuer-/Messleitung 8 und der Wärmedämmschlauch 10 mit den flexiblen Rohrleitungen 6, also das Leitungssystem 5, einfach und schnell gemeinsam verlegt werden können. Die Folie 12 bietet zusätzlich auch einen, vor allem beim Verlegen der Leitungssysteme 5, sinnvollen mechanischen Schutz vor Beschädigungen des Wärmedämmschlauches 10.

Außerdem weist der Wärmedämmschlauch 10 im Bereich zwischen den beiden flexiblen Rohrleitungen 6 eine optionale Perforation 13 auf. So wird es ermöglicht, dass das Leitungssystem 5 ohne großen Aufwand und ohne den Wärmedämmschlauch 10 unkontrolliert zu beschädigen, zumindest teilweise in zwei Einzelleitungen aufgeteilt werden kann. So können beim Verlegen des Leitungssystems 5 die zwei getrennt zueinander zu den jeweiligen Anschlusspunkten der Anlagenkomponenten 2, 3, 4 verlaufenden Leitungsenden 7 einfach, sicher und schnell bereitgestellt werden.

Fig. 3 zeigt nun einen Teil des Leitungssystems 5. Dieser Teil stellt hier den Übergang zwischen dem eigentlichen Leitungssystem 5 und dem Bereich des Leitungsendes 7 dar. Von den flexiblen Rohrleitungen 6 ist dabei eine der Rohrleitungen angedeutet, die Andere explizit in einem Teilschnitt dargestellt.

Der Übergang von dem Leitungssystem 5 in die Leitungsenden 7 kann dabei entweder durch ein Aufteilen des Leitungssystems 5 entlang der oben beschriebenen Perforation 13 erfolgen, es kann alternativ dazu, wie in Fig. 3 dargestellt, jedoch auch die flexible Rohrleitung 6 über das Ende des Wärmedämmschlauchs 10 hinausragen. Diese sind dann über jeweils unabhängig voneinander verlaufende einzelne Wärmedämmschläuche 14 isoliert, welche auf die überstehenden Enden der flexiblen Rohrleitungen 7 aufgesteckt werden können und welche nach Möglichkeit mit dem Wärmedämmschlauch 10 des Leitungssystems 5 verklebt werden sollten.

Als Alternative dazu wären auch einstückige Fortsätze des Wärmedämmschlauchs 10 denkbar, welche die Leitungsenden 7 isolieren. Die so entstehenden, isolierten Leitungsenden 7 müssten dann auf die entsprechenden, üblichen Abstände der Anschlusspunkte vorkonfektioniert werden. Durch 2 verschiedene Leitungssysteme 5, eines mit den getrennt voneinander verlaufenden Leitungsenden 7 an seinem einen Ende und einem anderen Leitungssystem ohne überstehende Leitungsenden 7 könnten dann, durch deren Kombination in verschiedener Anzahl, je nach erforderlicher Länge des Leitungssystems 5 praktisch alle Montageaufgaben gelöst werden. Diese Vorgehensweise stellt dann jedoch hohe Anforderungen an die Dichtheit der Verbindungen der Leitungssysteme 5, was durch die nachfolgend beschriebene Art der Abdichtung jedoch kein Problem darstellen wird.

Um nun die flexiblen Rohrleitungen 6, welche, wie in Fig. 3 dargestellt, zu ihrem überwiegend größten Teil als Wellrohrleitungen ausgeführt sind, an den Anschlusspunkten der Anlagenkomponenten 2, 3, 4 oder untereinander abdichten zu können, sind Dichteinrichtungen mit entsprechenden Dichtringen oder dergleichen erforderlich. Diese Dichteinrichtungen sind auf den Wellrohren sehr ungünstig einzusetzen und bei der Verwendung von Dichtmaterialien aus Gummi oder dergleichen kommt es durch die in den flexiblen Rohrleitungen 6 umgewälzten Stoffe, wie beispielsweise Solen oder Frostschutzmittel enthaltendes Wasser, häufig zu Beeinträchtigungen der Dichtheit.

Um diese Problematik zu beheben, wird, wie in Fig. 3 erkennbar, an die flexiblen Rohrleitungen 6, welche hier als Wellrohre ausgeführt sind, an ihren flexiblen Leitungsenden wenigstens annähernd zylindrische Rohrelemente 15 angebracht, in diesem Fall angeschweißt. Auf diesen wenigstens annähernd zylindrischen Rohrelementen 15 lassen sich dann Dichtungseinrichtungen, welche ausschließlich metallische Materialien aufweisen, wie beispielsweise an sich bekannte Klemmringdichtungen (nicht dargestellt), anbringen. Über diese Dichtungseinrichtungen an den wenigstens annähernd zylindrischen Rohrelementen 15 ist es dann möglich, sehr sichere und einfache abdichtende Verbindungen zu realisieren, welche gegenüber den in den Leitungen transportierten Stoffen resistent sind. Als Normteile sind die Klemmringdichtungen außerdem langfristig erprobt und aufgrund der großen Stückzahlen sehr kostengünstig. Alternativ wären selbstverständlich auch Schneidringdichtungen denkbar, die allerdings höhere Kosten verursachen würden.

Fig. 4 zeigt eine erfindungsgemäße Ausführungsform einer der flexiblen Rohrleitungen 6. Diese Rohrleitung 6 setzt sich dabei in axialer Richtung abwechselnd aus wellrohrartigen Rohrelementen 16 und wenigstens annähernd zylindrischen Rohrelementen 15' zusammen. Dieser Aufbau garantiert eine ausreichende Flexibilität der Rohrleitung 6 aufgrund der wellrohrartigen Rohrelemente 16 über ihre gesamte Länge und ermöglicht dennoch bei einem Abtrennen der Rohrleitungen im Bereich von +/- ca. 5 cm ein wenigstens annähernd zylindrisches Rohrelement vorzufinden, welches als Endstück der flexiblen Rohrleitung 6 Verwendung finden und die entsprechenden Dichtungseinrichtungen aufnehmen kann. Dabei kann es gegebenenfalls sinnvoll sein, das zylindrische Rohrelement 15' durch eine eingeschobene Hülse mechanisch zu verstärken.

Das Wärmedämmmaterial des Wärmedämmschlauchs 10 sollte dabei wasserdicht, wasserdampfdiffusionsdicht, UV-beständig, hochtemperaturbeständig sein, um den Anforderungen, welche sich für ein Wärmedämmmaterial ganz allgemein und bezüglich des Temperaturniveaus insbesondere durch die Solaranlage 1 ergeben können, zu genügen. Als Wärmedämmmaterial könnte beispielsweise EPDM-Kautschuk Verwendung finden.

## Patentansprüche

1. Leitungssystem zur Verrohrung von Anlagenkomponenten im Bereich der Heizungstechnik, insbesondere von Solaranlagen, welches zwei flexible Rohrleitungen, insbesondere als Vor- und Rücklaufleitung, aufweist, welche mit einem Wärmedämmmaterial gegeneinander und gegenüber der Umgebung isoliert sind, wobei das Wärmedämmmaterial über die wenigstens annähernd größte Länge des Leitungssystems (5) als einstückiger Wärmedämmschlauch (10) mit wenigstens zwei Öffnungen für die flexiblen Rohrleitungen (6) ausgebildet ist, wobei die flexiblen Rohrleitungen (6) im Bereich ihrer jeweiligen Leitungsenden (7) in der Art über den einstückigen Wärmedämmschlauch (10) überstehen, dass sie zu entfernt voneinander angeordneten Anschlüssen der Anlagenkomponente (2,3,4) führbar sind, wobei diese überstehenden Leitungsenden (7) durch weiteres Wärmedämmmaterial (10,14) isoliert sind, und wobei zumindest die Leitungsenden (7) an ihren jeweiligen Endstücken wenigstens annähernd zylindrische Rohrelemente (15,15') aufweisen, welche mit auf den wenigstens annähernd zylindrischen Rohrelementen (15,15') angeordneten Dichtungseinrichtungen versehen sind,
**dadurch gekennzeichnet, dass**
die flexiblen Rohrleitungen (6) aus in axialer Richtung abwechselnd angeordneten wellrohrartigen und wenigstens annähernd zylindrischen Rohrelementen (16,15') ausgebildet sind.

2. Leitungssystem nach Anspruch 1,
**dadurch gekennzeichnet, dass**
die Dichtungseinrichtungen ausschließlich metallische Werkstoffe aufweisen.

3. Leitungssystem nach Anspruch 1 oder 2,
**dadurch gekennzeichnet, dass**
die wenigstens annähernd zylindrischen Rohrelemente (15) mit den flexiblen Rohrleitungen (6) verschweißt sind.

4. Leitungssystem nach Anspruch 1,
**dadurch gekennzeichnet, dass**
die flexible Rohrleitung (6) einstückig aus den Rohrelementen (16,15') ausgebildet ist.

5. Leitungssystem nach einem der Ansprüche 1 bis 4,
**dadurch gekennzeichnet, dass**
die auf den wenigstens annähernd zylindrischen Rohrelementen (15,15') aufgebrachten Dichtungseinrichtungen als Klemmringdichtungen ausgebildet sind.

6. Leitungssystem nach einem der Ansprüche 1 bis 5,
**dadurch gekennzeichnet, dass**
das weitere Wärmedämmmaterial als eigenständiges Schlauchelement (14) ausgebildet ist und wobei jedes der eigenständigen Schlauchelemente (14) eine Verklebung mit dem einstückigen Wärmedämmschlauch (10) aufweist.

7. Leitungssystem nach einem der Ansprüche 1 bis 5,
**dadurch gekennzeichnet, dass**
das weitere Wärmedämmmaterial als einstückiger Fortsatz des einstückigen Wärmedämmschlauchs (10) ausgebildet ist.

8. Leitungssystem nach Anspruch 6,
**dadurch gekennzeichnet, dass**
der einstückige Wärmedämmschlauch (10) zwischen den beiden flexiblen Rohrleitungen (6) Sollbruchstellen (13) aufweist, so dass der Wärmedämmschlauch (10) wenigstens im Bereich der Leitungsenden (7) in zwei isolierte Einzelleitungen auftrennbar ist.

9. Leitungssystem nach einem der Ansprüche 1 bis 8,
**dadurch gekennzeichnet, dass**
das Wärmedämmmaterial wasserdampfdiffusionsdicht ist.

10. Leitungssystem nach einem der Ansprüche 1 bis 9,
**dadurch gekennzeichnet, dass**
das Wärmedämmmaterial UV-beständig ist.

11. Leitungssystem nach einem der Ansprüche 1 bis 10,
**dadurch gekennzeichnet, dass**
das Wärmedämmmaterial hochtemperaturbeständig ist.

12. Leitungssystem nach einem der Ansprüche 1 bis 11,
**dadurch gekennzeichnet, dass**
das Wärmedämmmaterial wenigstens eine weitere Öffnung, Kerbe (11) oder dergleichen aufweist, welche zur Aufnahme einer Steuer-/Messleitung (8) vorgesehen ist.

13. Leitungssystem nach einem der Ansprüche 1 bis 12,
**dadurch gekennzeichnet, dass**
mehrere Leitungssysteme (5) zu einem eine größere Länge aufweisenden Leitungssystem (5) verbindbar sind.

14. Leitungssystem nach einem der Ansprüche 1 bis 13,
**dadurch gekennzeichnet, dass**
jedes der Leitungssysteme (5) von einem UV-beständigen Schutzmantel (12) umgeben ist.

15. Leitungssystem nach Anspruch 14,
**dadurch gekennzeichnet, dass**
der Schutzmantel als Folie (12) ausgebildet ist.

## Claims

1. Conduit system for the pipe connection of system components in the field of heating technology, in particular of solar installations, which system has two flexible pipes, in particular as an outward and return conduit, which are insulated with a thermal insulation material from one another and the environment, the thermal insulation material being formed over the at least approximately greatest length of the conduit system (5) as a one-piece thermal insulation hose (10) with at least two openings for the flexible pipes (6), the flexible pipes (6) protruding in the area of their respective conduit ends (7) beyond the one-piece thermal insulation hose (10) such that they can be led to connections of the system components (2, 3, 4) that are arranged at a distance from one another, these protruding conduit ends (7) being insulated by further thermal insulation material (10, 14), and at least the conduit ends (7) having at their respective end pieces at least approximately cylindrical pipe elements (15, 15'), which are provided with sealing devices arranged on the at least approximately cylindrical pipe elements (15, 15'),
**characterized in that** the flexible pipes (6) are formed from corrugated-pipe-like and at least approximately cylindrical pipe elements (16, 15') arranged alternately in an axial direction.

2. Conduit system according to claim 1,
**characterized in that** the sealing devices have exclusively metal materials.

3. Conduit system according to claim 1 or 2,
**characterized in that** the at least approximately cylindrical pipe elements (15) are welded to the flexible pipe elements (6).

4. Conduit system according to claim 1,
**characterized in that** the flexible pipe (6) is formed in one piece from the pipe elements (16, 15').

5. Conduit system according to one of claims 1 to 4,
**characterized in that** the sealing devices fitted on the at least approximately cylindrical pipe elements (15, 15') are formed as clamping ring seals.

6. Conduit system according to one of claims 1 to 5,
**characterized in that** the further thermal insulation material is formed as an independent hose element (14), each of the independent hose elements (14) exhibiting gluing to the one-piece thermal insulation hose (10).

7. Conduit system according to one of claims 1 to 5,
**characterized in that** the further thermal insulation material is formed as a one-piece extension of the one-piece thermal insulation hose (10).

8. Conduit system according to claim 6,
**characterized in that** the one-piece thermal insulation hose (10) has predetermined breaking points (13) between the two flexible pipes (6), so that the thermal insulation hose (10) can be separated at least in the area of the conduit ends (7) into two insulated single conduits.

9. Conduit system according to one of claims 1 to 8,
**characterized in that** the thermal insulation material is impermeable to water vapour diffusion.

10. Conduit system according to one of claims 1 to 9,
**characterized in that** the thermal insulation material is UV-resistant.

11. Conduit system according to one of claims 1 to 10,
**characterized in that** the thermal insulation material is resistant to high temperatures.

12. Conduit system according to one of claims 1 to 11,
**characterized in that** the thermal insulation material has at least one further opening, notch (11) or the like, which is provided to take up a control/measuring cable (8).

13. Conduit system according to one of claims 1 to 12,
**characterized in that** several conduit systems (5) can be joined to form a conduit system (5) having a greater length.

14. Conduit system according to one of claims 1 to 13,
**characterized in that** each of the conduit systems (5) is enclosed by a UV-resistant protective sheath (12).

15. Conduit system according to claim 14,
**characterized in that** the protective sheath is formed as film (12).

## Revendications

1. Système de canalisations pour la tuyauterie de composants d'une installation dans le domaine du chauffage, plus particulièrement dans le domaine des installations solaires, qui comprend deux canalisations tubulaires flexibles, notamment une canalisation montante et une canalisation descendante, qui sont isolées l'une par rapport à l'autre et par rapport à l'environnement à l'aide d'un matériau d'isolation thermique, dans lequel le matériau d'isolation thermique est constitué d'au moins une longueur la plus importante du système de canalisation (5) comme un tuyau d'isolation thermique monobloc (10) avec au moins deux ouvertures pour les canalisations tubulaires flexibles (6), dans lequel les canalisations tubulaires flexibles (6) dépassent d'un tuyau d'isolation thermique monobloc (10) de telle sorte qu'elles puissent être guidées vers des raccordements, éloignés les uns des autres, des composants de l'installation (2, 3, 4), dans lequel ces extrémités de canalisations (7) qui dépassent sont isolées à l'aide d'un autre matériau d'isolation thermique (10, 14), et dans lequel au moins les extrémités des canalisations (7) comprennent, au niveau de leurs embouts, des éléments tubulaires (15, 15') au moins approximativement cylindriques, qui sont pourvus de dispositifs d'étanchéité disposés sur ces éléments tubulaires (15, 15') au moins approximativement cylindriques,
**caractérisé en ce que**
les canalisations tubulaires (6) sont constituées d'éléments tubulaires (16, 15') en forme de tubes ondulés et au moins approximativement cylindriques, disposés de manière alternée dans la direction axiale.

2. Système de canalisations selon la revendication 1,
**caractérisé en ce que**
les dispositifs d'étanchéité comprennent exclusivement des matériaux métalliques.

3. Système de canalisations selon la revendication 1 ou 2,
**caractérisé en ce que**
les éléments tubulaires (15) au moins approximativement cylindriques sont soudés avec les canalisations tubulaires flexibles (6).

4. Système de canalisations selon la revendication 1,
**caractérisé en ce que**
la conduite tubulaire flexible (6) est constituée, de manière monobloc, des éléments tubulaires (16, 15').

5. Système de canalisations selon l'une des revendications 1 à 4,
**caractérisé en ce que**
les dispositifs d'étanchéité disposés sur les éléments tubulaires (15, 15') au moins approximativement cylindriques sont conçus comme des joints d'étanchéité à bague de serrage.

6. Système de canalisations selon l'une des revendications 1 à 5,
**caractérisé en ce que**
l'autre matériau d'isolation est conçu comme un élément de tuyau indépendant (14) et chacun des éléments de tuyau indépendants (14) comportant un collage avec le tuyau d'isolation thermique monobloc (10).

7. Système de canalisations selon l'une des revendications 1 à 5,
**caractérisé en ce que**
l'autre matériau d'isolation thermique est conçu comme un prolongement monobloc du tuyau d'isolation thermique (10).

8. Système de canalisations selon la revendication 6,
**caractérisé en ce que**
le tuyau d'isolation thermique monobloc (10) comprend, entre les deux canalisations tubulaires flexibles (6), des endroits de rupture prédécoupés (13) de telle sorte que le tuyau d'isolation thermique (10) puisse être séparé, au moins au niveau des extrémités des canalisations (7), en deux canalisations différentes.

9. Système de canalisations selon l'une des revendications 1 à 8,
**caractérisé en ce que**
le matériau d'isolation thermique est étanche à diffusion de la vapeur d'eau.

10. Système de canalisations selon l'une des revendications 1 à 9,
**caractérisé en ce que**
le matériau d'isolation thermique est résistant aux UV.

11. Système de canalisations selon l'une des revendications 1 à 10,
**caractérisé en ce que**
le matériau d'isolation thermique résiste à de hautes températures.

12. Système de canalisations selon l'une des revendications 1 à 11,
**caractérisé en ce que**
le matériau d'isolation thermique comprend au moins une autre ouverture, une encoche (11) ou similaire, qui sert à loger une conduite de commande/mesure (8).

13. Système de canalisations selon l'une des revendications 1 à 12,
**caractérisé en ce que**
plusieurs systèmes de canalisations (5) peuvent être assemblés en un système de canalisation (5) ayant une longueur plus importante.

14. Système de canalisations selon l'une des revendications 1 à 13,
**caractérisé en ce que**
chacun des systèmes de canalisations (5) est entouré d'un revêtement de protection (12) résistant aux UV.

15. Système de canalisations selon la revendication 14,
**caractérisé en ce que**
le revêtement de protection est conçu comme un film (12).
